# EUROPÄISCHE PATENTSCHRIFT

(11) **EP 3 636 371 B1**
(45) Veröffentlichungstag und Bekanntmachung des Hinweises auf die Patenterteilung: **08.12.2021**
(21) Anmeldenummer: 19202296.0
(22) Anmeldetag: 09.10.2019
(51) Int. Cl.: B23D 51/10

(54) **STICHSÄGE**
JIG SAW
SCIE SAUTEUSE

(30) Priorität: 11.10.2018 DE 102018125175
(43) Veröffentlichungstag der Anmeldung: 15.04.2020
(73) Patentinhaber: Mafell AG, 78727 Oberndorf a.N. (DE)
(72) Erfinder: Faißt, Rainer, 72175 Dornhan-Weiden (DE); Lunze, Stefan, 78727 Oberndorf am Neckar (DE)
(74) Vertreter: Manitz Finsterwald Patent- und Rechtsanwaltspartnerschaft mbB

(56) Entgegenhaltungen:
- EP-A2- 1 964 635
- DE-A1- 19 951 040
- US-A- 5 421 232
- US-A- 5 903 983

## Beschreibung

Die vorliegende Erfindung betrifft eine Stichsäge gemäß dem Oberbegriff des Anspruchs 1, mit einem Sägeblatt, einem Stößel für eine Sägebewegung des Sägeblatts entlang einer Stößelachse und einer Spannvorrichtung zum festen Einspannen des Sägeblatts am Stößel.

Eine solche Stichsäge ist aus DE 199 51 040 A1 bekannt.

Derartige Stichsägen mit fest eingespanntem Sägeblatt sind grundsätzlich bekannt, beispielsweise aus EP 2 236 233 A1. Bei anderen herkömmlichen Stichsägen wird das Sägeblatt üblicherweise nur in axialer Richtung am Stößel fest angebracht, während dem Sägeblatt in radialer Richtung ein gewisses Spiel gelassen und dafür versucht wird, das Sägeblatt an seinem unteren Bereich lediglich zu führen und zu stabilisieren.

Es hat sich in der Praxis gezeigt, dass ein festes Einspannen des Sägeblatts besonders vorteilhaft ist, wenn sowohl eine hohe Sägeleistung als auch saubere Schnitte verlangt werden. Man erklärt sich das ausgezeichnete Sägeverhalten eines derart fest eingespannten Sägeblatts mit dem Prinzip, das sogenannten "Japansägen" zugrunde liegt. Bei solchen Sägen ist das Sägeblatt mit Ausnahme des festen Einspannens am Stößel völlig frei und ungeführt und damit gewissermaßen sich selbst überlassen. Das Sägeblatt wird hierbei ausschließlich gezogen und läuft damit lediglich nach. Durch diesen Nachlauf ist das Sägeblatt in der Lage, sich selbst gerade zu ziehen bzw. sich selbst auszurichten.

Bisher bekannte Einspannvorrichtungen, die in der Lage sind, ein Sägeblatt fest einzuspannen, sind bislang nur mit vergleichsweise hohem Aufwand herstellbar und folglich mit relativ hohen Produktionskosten verbunden.

Es ist daher eine Aufgabe der Erfindung, eine Stichsäge der eingangs genannten Art derart weiterzuentwickeln, dass deren Herstellung einfacher und kostengünstiger erfolgen kann, ohne dass das Sägeverhalten nachteilig beeinflusst wird.

Diese Aufgabe wird durch eine Stichsäge mit den Merkmalen des Anspruchs 1 gelöst.

Insbesondere umfasst die Spannvorrichtung eine Ausrichtfläche für das Sägeblatt, zumindest ein Spannorgan und eine Betätigungseinrichtung zum Beaufschlagen des Spannorgans, wobei eine Rotationsbewegung der Betätigungseinrichtung um die Stößelachse in eine senkrecht zur Stößelachse erfolgende Spannbewegung des Spannorgans umsetzbar ist, durch die das Spannorgan das Sägeblatt in Richtung der Ausrichtfläche beaufschlagt.

Durch die Erfindung kann eine für den Benutzer besonders einfache Betätigung der Spannvorrichtung realisiert werden. Der Benutzer muss lediglich die Betätigungseinrichtung um die Stößelachse drehen, um die Spannvorrichtung zu betätigen und so das Sägeblatt einzuspannen bzw. zu lösen. Ein solches Spannkonzept kann auf besonders einfache Weise realisiert werden, wodurch die Herstellungskosten erheblich gesenkt werden können. Die Betätigungseinrichtung kann insbesondere derart ausgebildet sein, dass ein werkzeugloses Betätigen der Spannvorrichtung von Hand möglich ist. Ein weiterer Vorteil der Erfindung ist, dass ein solches Spannkonzept es ermöglicht, unterschiedlich dicke Sägeblätter einzuspannen.

Bevorzugt ist es lediglich erforderlich, die Betätigungseinrichtung um einen Stellwinkel von weniger als 360° zu verdrehen, um die Spannvorrichtung von einer das Sägeblatt fest einspannenden Schließstellung in eine das Sägeblatt freigebenden Öffnungsstellung zu überführen. Insbesondere beträgt der Stellwinkel weniger als 180°. Bevorzugt liegt der Stellwinkel etwa in einem Bereich von 90° bis 120°.

Weiterbildungen der Erfindung sind in den abhängigen Ansprüchen, der Beschreibung sowie der Zeichnung angegeben.

Gemäß einer Ausführungsform ist die gesamte Spannvorrichtung ein Bestandteil des Stößels und gemeinsam mit dem Stößel bewegbar. Die Stichsäge kann so besonders kompakt ausgebildet werden. Bevorzugt bildet die Spannvorrichtung das freie Ende des Stößels.

Eine Ausführungsform sieht vor, dass die Betätigungseinrichtung der Spannvorrichtung einen, bevorzugt ring- oder hülsenförmigen, Hohlkörper umfasst, wobei das Spannorgan und die Ausrichtfläche innerhalb des Hohlkörpers angeordnet sind. Beispielsweise handelt es sich bei der Betätigungseinrichtung um eine einfach herstellbare Drehhülse. Bevorzugt ist der Hohlkörper derart ausgebildet, dass ein Benutzer ihn von Hand verdrehen kann, um die Spannvorrichtung zu betätigen.

Die Betätigungseinrichtung kann demzufolge zwei Funktionen aufweisen. Einerseits dient sie zum Betätigen der Spannvorrichtung durch einfaches Verdrehen und andererseits bildet sie selbst zugleich eine Art Gehäuse der Spannvorrichtung, wodurch die Stichsäge besonders kompakt und einfach ausgebildet ist.

Erfindungsgemäß ist die Spannvorrichtung von einem Träger des Stößels getragen. Bei dem Träger kann es sich beispielsweise um eine Hubstange handeln, die mit einem Antrieb der Stichsäge zusammenwirkt, um die Auf- und Abbewegung und gegebenenfalls auch eine Pendelbewegung auf die Spannvorrichtung und somit auf das Sägeblatt zu übertragen.

Eine weitere Ausführungsform sieht vor, dass die Spannvorrichtung an einem freien Endbereich des Trägers angeordnet ist.

Bevorzugt ist die Betätigungseinrichtung drehbar an dem Träger des Stößels angebracht. Dementsprechend braucht ein Benutzer zum Einspannen eines Sägeblatts die Betätigungseinrichtung lediglich relativ zum Träger zu drehen, um so die Rotationsbewegung in die Spannbewegung des Spannorgans umzusetzen.

Erfindungsgemäß umfasst der Träger einen Aufnahmeabschnitt für das Sägeblatt, in den das Sägeblatt einsetzbar ist und der den freien Endbereich des Trägers bildet, wobei die Betätigungseinrichtung den Aufnahmeabschnitt des Trägers umgibt. Hierdurch lässt sich ein besonders Platz sparender Aufbau am freien Endbereich des Trägers erzielen.

Bevorzugt ist die Ausrichtfläche an dem Aufnahmeabschnitt des Trägers ausgebildet. Hierdurch kann das Sägeblatt direkt am Träger eingespannt werden.

Gemäß einem Ausführungsbeispiel ist das Spannorgan an dem Aufnahmeabschnitt beweglich gelagert. Der Aufnahmeabschnitt dient also nicht nur zum Aufnehmen des Sägeblatts, sondern außerdem als Lager für das Spannorgan, um insbesondere die Bewegung des Spannorgans zu führen. Das Spannorgan kann sich demzufolge beim Öffnen und Schließen der Spannvorrichtung relativ zu dem Aufnahmeabschnitt bewegen. Insbesondere kann durch diese Bewegbarkeit des Spannorgans erreicht werden, dass Sägeblätter unterschiedlicher Dicke verwendet werden können.

Gemäß einem Ausführungsbeispiel erfolgt die Spannbewegung des Spannorgans zwischen der Betätigungseinrichtung und dem Aufnahmeabschnitt des Trägers.

Die Erfindung sieht vor, dass der Aufnahmeabschnitt Formschlussmittel aufweist, die ein in den Aufnahmeabschnitt eingesetztes Sägeblatt in axialer Richtung positionieren. Hierdurch kann eine korrekte Positionierung des Sägeblatts im Aufnahmeabschnitt gewährleistet und außerdem sichergestellt werden, dass das Sägeblatt von dem Stößel bei dessen Auf- und Abbewegung mitgenommen wird, ohne aus der Spannvorrichtung zu rutschen. Zudem kann durch die Formschlussmittel das Sägeblatt im gelösten Zustand der Spannvorrichtung gegen ein Herausfallen gesichert werden.

Gemäß einer weiteren Ausführungsform bilden die Formschlussmittel und die Ausrichtfläche eine zum Spannorgan hin offene Aufnahme für das Sägeblatt. Dies kann sowohl das Einlegen als auch das Herausnehmen des Sägeblatts erleichtern.

Gemäß einem Ausführungsbeispiel ist zum Umsetzen der Rotationsbewegung der Betätigungseinrichtung in die Spannbewegung des Spannorgans ein Umsetzmechanismus vorgesehen.

Bevorzugt ist der Umsetzmechanismus selbsthemmend ausgebildet. Hierdurch lässt sich ein ungewolltes Bewegen der Betätigungseinrichtung und insbesondere ein unbeabsichtigtes Lösen der Spannvorrichtung verhindern.

Ein weiteres Ausführungsbeispiel sieht vor, dass der Umsetzmechanismus mehrstufig ausgebildet ist und eine von der Rotationsbewegung der Betätigungseinrichtung gebildete Eingangsbewegung über wenigstens eine Zwischenbewegung in eine von der Spannbewegung des Spannorgans gebildete Ausgangsbewegung umsetzt. Eine mehrstufige Ausgestaltung der Bewegungsabläufe hat unter anderem den Vorteil, dass jeder Bewegungsablauf einzeln optimiert werden kann.

Gemäß einer Ausführungsform setzt der Umsetzmechanismus die Rotationsbewegung der Betätigungseinrichtung in eine Translationsbewegung der Betätigungseinrichtung und die Translationsbewegung der Betätigungseinrichtung in die Spannbewegung des Spannorgans um.

Gemäß einer weiteren Ausführungsform umfasst der Umsetzmechanismus zwischen der Betätigungseinrichtung und einem Träger des Stößels ein Gewinde, durch welches die Rotationsbewegung der Betätigungseinrichtung in eine Translationsbewegung der Betätigungseinrichtung umsetzbar ist. Insbesondere ist das Gewinde selbsthemmend ausgebildet.

Der Umsetzmechanismus kann einen eine Rampe oder Schräge umfassenden Steuerabschnitt aufweisen, durch welchen eine Bewegung, insbesondere eine Rotationsbewegung oder Translationsbewegung, der Betätigungseinrichtung in die Spannbewegung des Spannorgans umsetzbar ist.

Hierdurch kann die Betätigungseinrichtung auf besonders einfache Weise das Spannorgan beaufschlagen. Eine mit dem Spannorgan zusammenwirkende Steuerfläche des Steuerabschnitts kann eben oder gekrümmt sein. Die Schräge oder Rampe kann sich z.B. in axialer Richtung beispielsweise geradlinig und schräg zur Stößelachse erstrecken, um eine Translationsbewegung der Betätigungseinrichtung umzusetzen. Die Schräge oder Rampe kann z.B. einfach von einem Übergangsabschnitt zwischen zwei axial aufeinanderfolgenden zylindrischen Abschnitten, die unterschiedliche Durchmesser aufweisen, einer die Betätigungseinrichtung bildenden Drehhülse gebildet werden. Alternativ kann sich die Schräge oder Rampe in Umfangsrichtung um die Stößelachse herum erstrecken, um eine Rotationsbewegung der Betätigungseinrichtung umzusetzen. In letzterem Fall kann der Steuerabschnitt beispielsweise an der Innenseite eines die Betätigungseinrichtung bildenden, z.B. ring- oder hülsenförmigen, Hohlkörpers ausgebildet sein. Hierdurch ist es möglich, die Rotationsbewegung der Betätigungseinrichtung direkt, insbesondere ohne eine Zwischenbewegung z.B. in Form einer Translationsbewegung, in die Spannbewegung des Spannorgans umzusetzen.

Gemäß einer weiteren Ausführungsform ist ein Rückstellelement vorgesehen, gegen dessen Rückstellkraft die Rotationsbewegung der Betätigungseinrichtung von einer Schließstellung in eine Öffnungsstellung erfolgt. Durch das Rückstellelement wird die Betätigungseinrichtung im Betrieb der Stichsäge sicher in der Schließstellung gehalten. Es muss also von einem Benutzer eine Kraft aufgewendet werden, um gegen die Rückstellkraft des Rückstellelements die Betätigungseinrichtung in die Öffnungsstellung zu bringen. Das Rückstellelement kann dann für ein automatisches Schließen der Spannvorrichtung sorgen, sobald der Benutzer die Betätigungseinrichtung nicht mehr in der Offenstellung festhält.

Vorzugsweise umfasst das Rückstellelement eine Schrauben-, Gewinde- oder Drehfeder, die zwischen einem Aufnahmeabschnitt eines Trägers des Stößels und einem von der Betätigungseinrichtung gebildeten, den Aufnahmeabschnitt umgebenden Hohlkörper wirksam ist. Mittels einer derartigen Feder, die sich einerseits am Aufnahmeabschnitt und andererseits an dem Hohlkörper, z.B. einer die Betätigungseinrichtung bildenden Drehhülse, abstützen kann, lässt sich die Rückstellfunktion auf besonders einfache und zuverlässige Weise realisieren.

Ein Ausführungsbeispiel sieht vor, dass das Spannorgan einteilig oder einstückig ausgebildet ist und jeweils direkt einerseits mit der Betätigungseinrichtung und andererseits mit dem Sägeblatt zusammenwirkt. Dies stellt eine besonders einfache und kostengünstige Variante des Spannorgans bzw. der gesamten Spannvorrichtung dar.

Gemäß einer anderen Variante ist das Spannorgan mehrteilig ausgebildet und umfasst ein Druckelement zum Beaufschlagen des Sägeblatts, ein mit der Betätigungseinrichtung zusammenwirkendes Übertragungselement sowie zwischen dem Übertragungselement und dem Druckelement eine Druckfeder. Hierdurch kann erreicht werden, dass das Sägeblatt auch im nicht fest eingespannten Zustand durch die zwischen Übertragungselement und Druckelement wirksame Druckfeder in Anlage an der Ausrichtfläche gehalten wird.

Des Weiteren kann ein durch Einsetzen des Sägeblatts spannbarer Auswerfer vorgesehen sein. Der Auswerfer kann bei geöffneter Spannvorrichtung die Entnahme des Sägeblatts erleichtern.

Gemäß einer Ausführungsform umfasst der Auswerfer eine an einem Träger des Stößels abgestützte Auswurffeder, die bei eingesetztem Sägeblatt ein mit dem Sägeblatt zusammenwirkendes Auswurfelement in eine Auswurfrichtung vorspannt.

Gemäß einer weiteren Ausführungsform ist ein Pendelerreger für eine Pendelbewegung des Sägeblatts vorgesehen.

Die Erfindung wird im Folgenden beispielhaft unter Bezugnahme auf die Zeichnung beschrieben. In dieser zeigt:
- Fig. 1: verschiedene Ansichten eines erfindungsgemäßen Stößels mit eingespanntem Sägeblatt;
- Fig. 2: perspektivische Ansichten des Aufnahmeabschnitts mit eingesetztem Sägeblatt;
- Fig. 3: den Aufnahmeabschnitt mit eingelegtem Sägeblatt und Rückstellfeder;
- Fig. 4: den Aufnahmeabschnitt mit eingelegtem Sägeblatt, Rückstellfeder und eingesetztem Druckstück;
- Fig. 5: eine perspektivische Ansicht des Aufnahmeabschnitts ohne eingesetztes Sägeblatt;
- Fig. 6: die als Drehhülse ausgebildete Betätigungseinrichtung;
- Fig. 7: verschiedene Ansichten eines Druckstücks der Spannvorrichtung;
- Fig. 8: einen Schnitt durch den Stößel mit eingespanntem Sägeblatt in Schließstellung der Spannvorrichtung;
- Fig. 9: einen Schnitt durch den Stößel in Öffnungsstellung der Spannvorrichtung ohne Sägeblatt; und
- Fig. 10: einen Schnitt durch den Stößel in Öffnungsstellung der Spannvorrichtung bei einem Sägeblattwechsel mit einem noch nicht vollständig entnommenen Sägeblatt, das doppelt so dick ist wie das Sägeblatt gemäß Fig. 8.

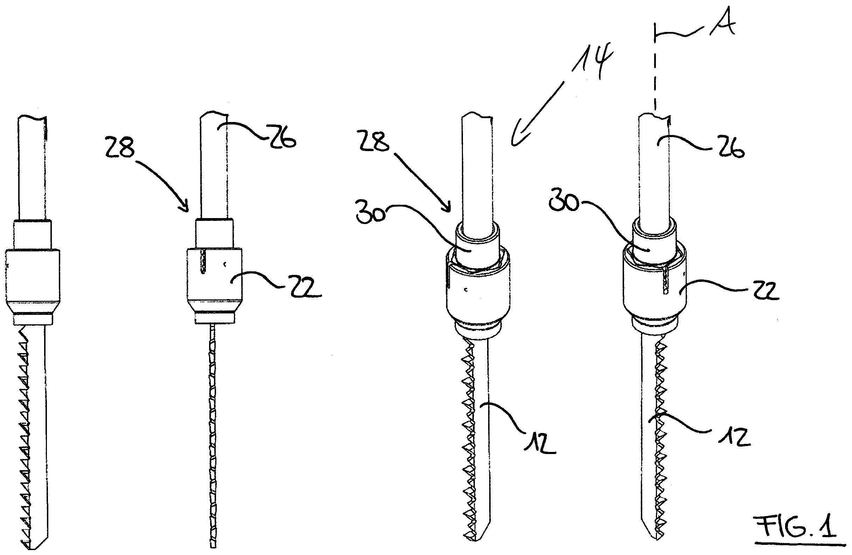

In Fig. 1 sind verschiedene Ansichten eines Stößels 14 einer erfindungsgemäßen Stichsäge mit einem eingespannten Sägeblatt 12 dargestellt. Zu erkennen ist ein Träger 26 in Form einer Hubstange, die zum Ausführen einer Sägebewegung mittels eines nicht näher dargestellten Antriebs der Stichsäge in eine Auf- und Abbewegung und zusätzlich über einen nicht dargestellten Pendelerreger in eine Pendelbewegung versetzbar ist. Aufbau und Funktionsweise einer derartigen Pendelhubsäge sowie verschiedene Möglichkeiten zum Antreiben eines Stößels einer solchen Stichsäge sind dem Fachmann grundsätzlich bekannt, so dass hierauf nicht näher eingegangen zu werden braucht.

Der freie Endbereich 28 des Trägers 26 wird von einem Aufnahmeabschnitt 30 gebildet, von dem in Fig. 1 lediglich ein Teil zu sehen ist. An dem Aufnahmeabschnitt 30 ist eine als Betätigungseinrichtung dienende Drehhülse 22 drehbar gelagert, die den Aufnahmeabschnitt 30 umgibt. Ein Benutzer kann zum Betätigen einer nachstehend näher beschriebenen Spannvorrichtung die Hülse 22 um den Aufnahmeabschnitt 30 - und damit um die Stößelachse A - drehen und die Hülse 22 somit (je nach Drehrichtung) entweder in eine Öffnungsstellung oder eine Schließstellung bringen.

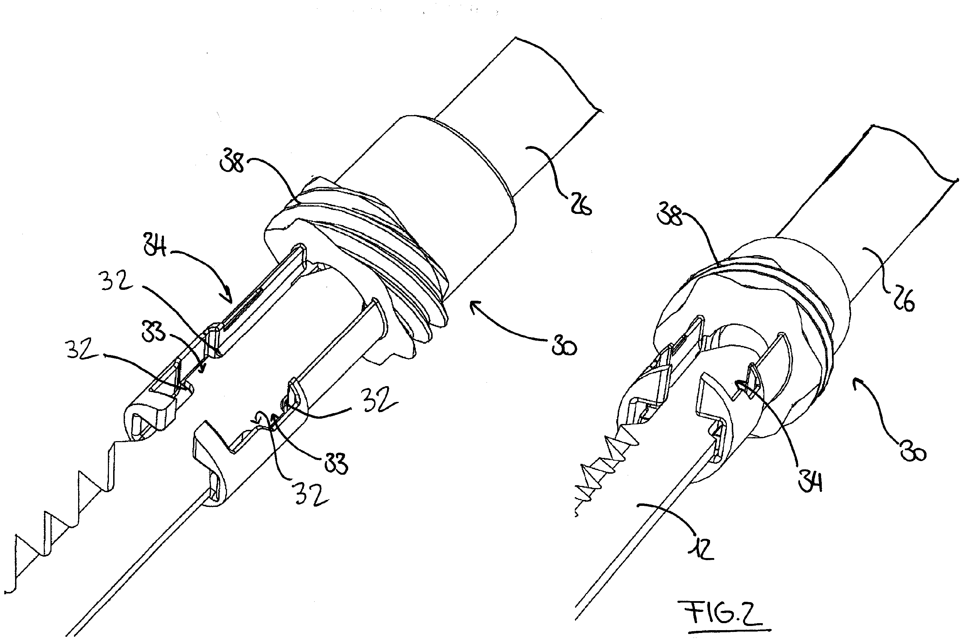

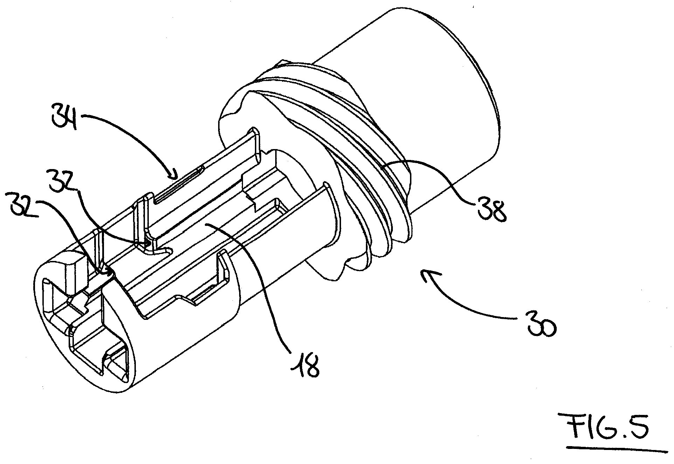

Der Aufnahmeabschnitt 30 wird im Zusammenhang mit den Fig. 2 bis 5 sowie den Fig. 8 bis 10 näher beschrieben. In Fig. 5 ist der Aufnahmeabschnitt 30 ohne Sägeblatt, in Fig. 2 mit eingelegtem Sägeblatt 12 dargestellt. Es ist zu erkennen, dass der Aufnahmeabschnitt 30 an seinem einen Ende eine zu einer Seite hin offene Aufnahme 34 für das Sägeblatt 12 aufweist, in die das Sägeblatt 12 mit seinem Einspannbereich eingelegt werden kann. Hierbei wird das Sägeblatt 12 an eine Ausrichtfläche 18 angelegt, wobei es mit seitlich abstehenden Vorsprüngen 33 seines Einspannbereiches mit in Form von Vorsprüngen 32 vorgesehenen Formschlussmitteln 32 der Aufnahme 34 einen Formschluss eingeht.

Somit wird das Sägeblatt 12 bereits in axialer Richtung, also entlang der Stößelachse A, korrekt positioniert, auch wenn die Spannvorrichtung 16 sich noch in geöffneter Stellung befindet. Bei eingespanntem Sägeblatt 12 ist durch die Vorsprünge 32 sichergestellt, dass das Sägeblatt 12 von dem Stößel 14 bei dessen Auf- und Abbewegung mitgenommen wird.

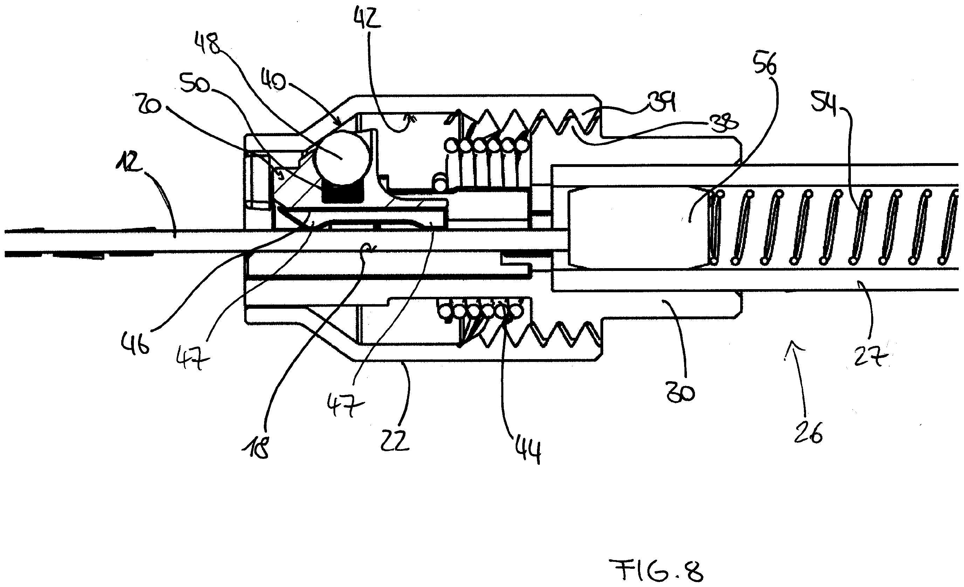

Des Weiteren ist in den Fig. 2 bis 5 ein Teil eines Umsetzmechanismus dargestellt. Dieser umfasst am Aufnahmeabschnitt 30 ein Außengewinde 38, welches mit einem Innengewinde 39 der Hülse 22 (vgl. Fig. 8 bis 10) zusammenwirkt, um die Rotationsbewegung der Hülse 22 in eine Translationsbewegung der Hülse 22 umzusetzen. Das Gewinde 38, 39 ist selbsthemmend ausgebildet, um einem ungewolltes Drehen der in der Schließstellung befindlichen Hülse 22 entgegen zu wirken.

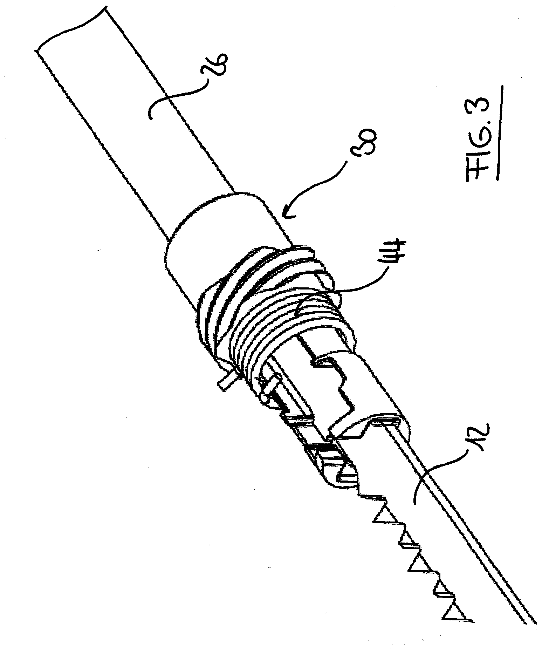

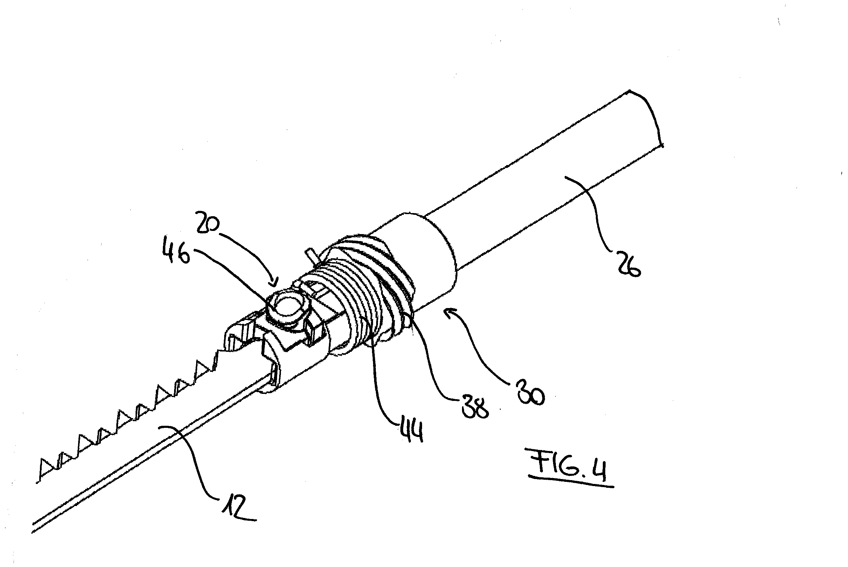

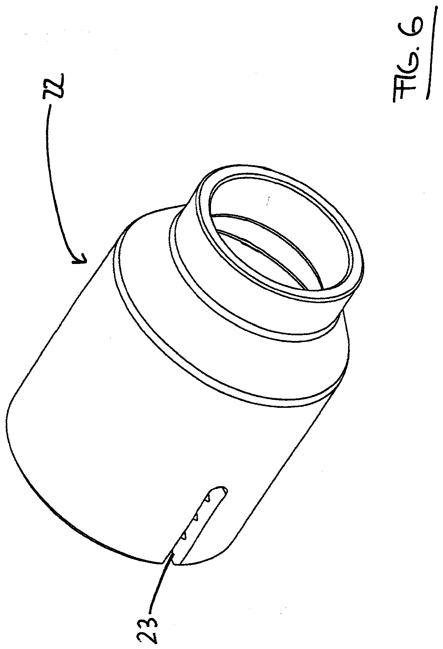

An dem Aufnahmeabschnitt 30 ist außerdem ein Rückstellelement 44 in Form einer Schraubenfeder angeordnet (siehe Fig. 3 und 4), die mit einem Ende von innen in einen Schlitz 23 (Fig. 6) der Hülse 22 eingreift und sich mit dem anderen Ende am Aufnahmeabschnitt 30 abstützt. Die Rückstellfeder 44 ist hierbei derart ausgebildet und angeordnet, dass sie der Hülse 22 beim Verdrehen in die Öffnungsstellung entgegenwirkt. Die Hülse 22 ist folglich in die geschlossene Stellung vorgespannt.

Zum Öffnen der Spannvorrichtung 16 wird dementsprechend die Hülse 22 in die Öffnungsstellung gebracht, indem sie gegen die Rückstellkraft der Schraubenfeder 44 gedreht wird. Folglich stellt die Rückstellfeder 44 die Hülse 22 - und damit die gesamte Spannvorrichtung 16 - automatisch in die geschlossene Stellung zurück, sobald der Benutzer die Hülse 22 loslässt.

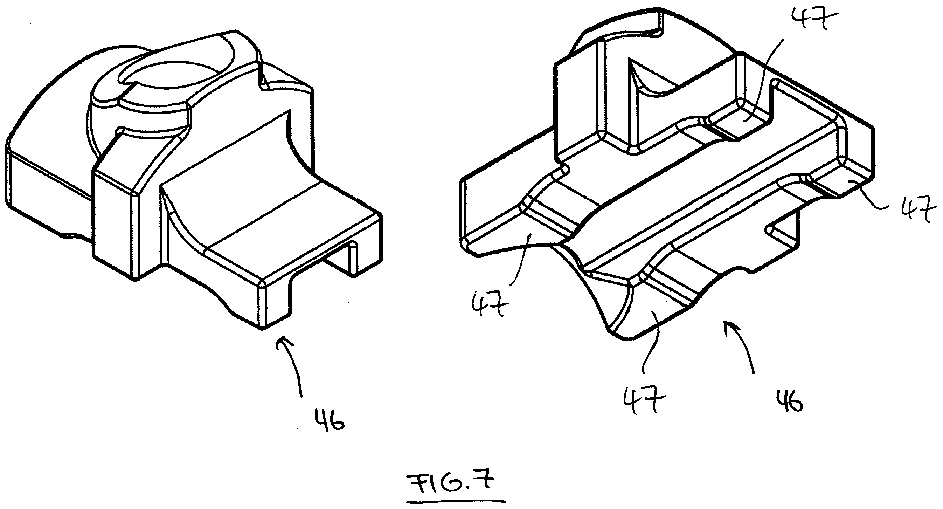

Fig. 4 zeigt den Aufnahmeabschnitt 30 mit in die Aufnahme 34 (Fig. 5) eingesetztem Sägeblatt 12 und mit dem Spannorgan 20. Das Spannorgan 20 umfasst ein Druckelement 46 (siehe auch Fig.7), das unmittelbar mit dem eingesetzten Sägeblatt 12 zusammenwirkt und (vgl. Fig. 8 bis 10) über ein Übertragungselement des Spannorgans in Form einer Kugel 48 mittels der Hülse 22 beaufschlagt werden kann. Zwischen der Kugel 48 und dem Druckelement 46 befindet sich eine Druckfeder 50 des Spannorgans. Die Hülse 22 ist an ihrer Innenwand 42 mit einem Steuerabschnitt 40 in Form einer umlaufenden Schräge versehen, die durch den Übergang von einem größeren Durchmesser der Hülse 22 auf einen kleineren Durchmesser der Hülse 22 gebildet ist. Der Steuerabschnitt 40 der Hülse 22 wirkt mit der Kugel 48 des Spannorgans zusammen.

Die Funktionsweise der Spannvorrichtung 16 wird im Zusammenhang mit den Fig. 8 bis 10 näher beschrieben.

Der Endbereich 28 des Trägers 26, d.h. hier der Hubstange der Stichsäge, wird von dem Aufnahmeabschnitt 30 gebildet, der fest mit einem Rohrabschnitt 27 des Trägers 26 verbunden und an dem die Ausrichtfläche 18 für das Sägeblatt 12 ausgebildet ist. Die Hülse 22 ist auf den Aufnahmeabschnitt 30 geschraubt. Durch das Zusammenspiel der Gewinde 38, 39 wird eine Rotationsbewegung der Hülse 22 in eine Translation der Hülse 22 in axialer Richtung umgesetzt.

In Fig. 8 befindet sich die Hülse 22 in der Schließstellung, in der das Druckelement 46 über die Kugel 48 durch die Schräge 40 gegen das Sägeblatt 12 gedrückt ist. Hierdurch ist bei in der Schließstellung befindlicher Hülse 22 das Sägeblatt 12 fest gegen die Ausrichtfläche 18 gedrückt und somit fest eingespannt. Die Spannkraft wird auf das Sägeblatt 12 nicht relativ großflächig, sondern über diskrete, vergleichsweise kleinflächige Spannvorsprünge 47 des Druckelements 46 auf das Sägeblatt 12 übertragen.

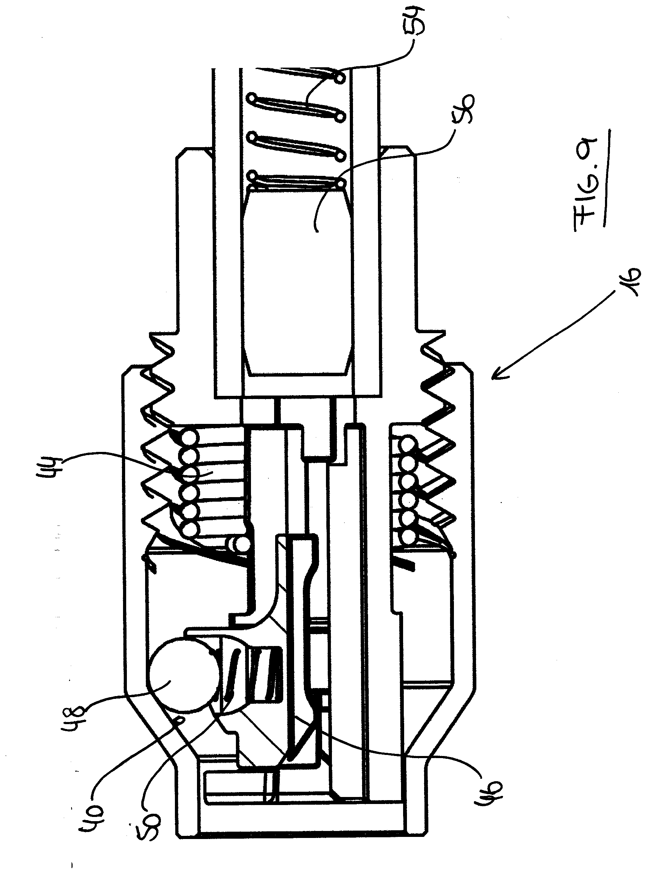

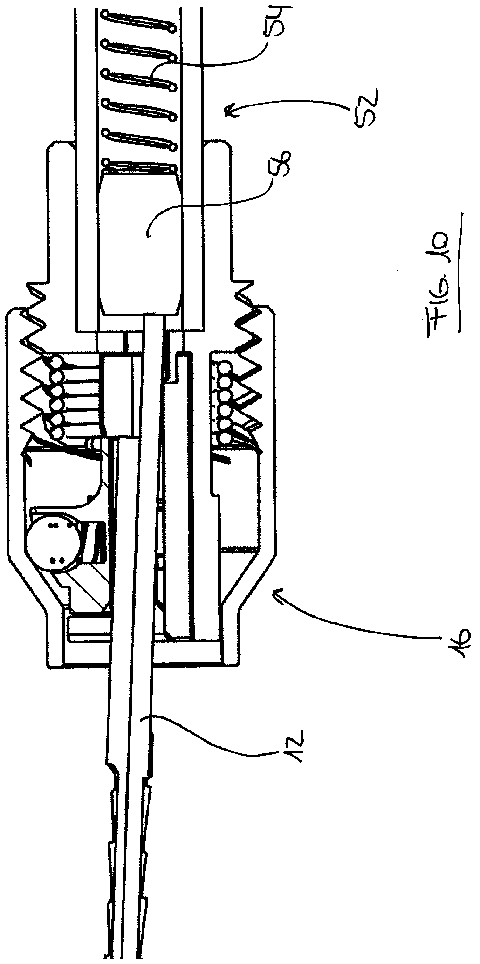

Wie Fig. 8 (und auch die Fig. 9 und 10) ebenfalls zeigt, ist als Entnahmehilfe für das Sägeblatt 12 ein Auswerfer innerhalb des Trägers 26 vorgesehen. Dieser umfasst eine Auswurffeder 54, die über ein Auswurfelement 56 durch Einsetzen des Sägeblatts 12 gespannt wird. Bei geöffneter Spannvorrichtung 16 und angehobenem Sägeblatt 12 (Fig. 10) wird somit das Sägeblatt 12 von dem Auswerfer aus dem Aufnahmeabschnitt 30 herausgedrückt. Ist das Sägeblatt 12 nicht angehoben, befinden sich dessen Vorsprünge 33 also auf der Höhe der Vorsprünge 32 der Aufnahme 34, dient der Auswerfer zudem dazu, das Sägeblatt 12 in axialer Richtung in der Aufnahme 34 zu fixieren, indem die Vorsprünge 33 des Sägeblatts 12 in axialer Richtung gegen die Vorsprünge 32 der Aufnahme 34 gedrückt werden.

In Fig. 9 ist die Spannvorrichtung 16 im geöffneten Zustand ohne Sägeblatt 12 dargestellt. Die Kugel 48 befindet sich dementsprechend an einem Bereich größeren Innendurchmessers der in Richtung des freien Endes des Stößels 14 relativ zum Aufnahmeabschnitt 30 geschraubten Hülse 22, so dass die Kugel 48 vom Druckelement 46 beabstandet ist. Gleichwohl ist das Druckelement 46 durch die Druckfeder 50 in Richtung der Ausrichtfläche 18 des Aufnahmeabschnitts 30 vorgespannt, um ein eingelegtes Sägeblatt 12 zwar nicht fest einzuspannen, aber in der Sollstellung, nämlich anliegend an der Ausrichtfläche 18, am Aufnahmeabschnitt 30 zu halten.

Auf eine solche Vorpositionierung des Sägeblatts 12, die hier durch den mehrteiligen Aufbau des Spannorgans 20 erzielt wird, kann in einer anderen, nicht dargestellten Ausführungsform der erfindungsgemäßen Stichsäge verzichtet werden. Ein einteiliges Spannorgan, das jeweils unmittelbar - also nicht über zusätzliche Teile wie z.B. die Kugel 48 und die Druckfeder 50 - mit der Schräge 40 der Hülse 22 einerseits und dem Sägeblatt 12 andererseits zusammenwirkt, ist folglich ebenfalls möglich.

In der Öffnungsstellung gemäß Fig. 9 ist die Schraubenfeder 44 aufgrund der zuvor erfolgten Rotation der Hülse 22 um den Aufnahmeabschnitt 30 gespannt. Die Hülse 22 bleibt demnach nur so lange in der geöffneten Stellung, wie der Benutzer diese festhält. Sobald der Benutzer die Hülse 22 loslässt, dreht sich diese aufgrund der Rückstellkraft der Schraubenfeder 44 automatisch wieder zurück in die Schließstellung und spannt das Sägeblatt 12 fest ein.

In Fig. 10 ist die Spannvorrichtung 16 wiederum in der Öffnungsstellung dargestellt, allerdings mit einem anderen, eine doppelt so große Dicke aufweisenden Sägeblatt 12 wie in Fig. 8. Hierdurch befindet sich das Druckelement 46 näher an der Kugel 48, d.h. die Druckfeder 50 ist stärker zusammengedrückt als bei einem dünneren Sägeblatt wie z.B. in Fig. 9.

Unabhängig von der Sägeblattdicke kann hier folglich das jeweilige Sägeblatt 12 mittels des Druckelements 46 gegen die Ausrichtfläche 18 vorgespannt und somit vorpositioniert werden.

Das Ausmaß der Spannbewegung des Druckelements 46, d.h. die Länge des Stellweges des Druckelements 46 senkrecht zur Stößelachse A, ist folglich groß genug, um Sägeblätter 12 unterschiedlicher Dicke aufnehmen zu können.

In Fig. 10 ist außerdem dargestellt, dass das Sägeblatt 12 schräg eingesetzt bzw. entnommen wird, damit die Vorsprünge 33 des Sägeblatts 12 an den Vorsprüngen 32 der Aufnahme 34 vorbei gelangen können (vgl. Fig. 2 und 5).

### Bezugszeichenliste

- 12: Sägeblatt
- 14: Stößel
- 16: Spannvorrichtung
- 18: Ausrichtfläche
- 20: Spannorgan
- 22: Betätigungseinrichtung
- 23: Schlitz
- 26: Träger
- 27: Rohrabschnitt
- 28: Endbreich
- 30: Aufnahmeabschnitt
- 32: Formschlussmittel
- 33: Vorsprung
- 34: Aufnahme
- 38: Außengewinde
- 39: Innengewinde
- 40: Steuerabschnitt
- 42: Innenwand
- 44: Rückstellelement
- 46: Druckelement
- 47: Spannvorsprung
- 48: Übertragungselement
- 50: Druckfeder
- 54: Auswurffeder
- 56: Auswurfelement
- A: Stößelachse

## Patentansprüche

1. Stichsäge mit
einem Sägeblatt (12),
einem Stößel (14) für eine Sägebewegung des Sägeblatts (12) entlang einer Stößelachse (A), und
einer Spannvorrichtung (16) zum festen Einspannen des Sägeblatts (12) am Stößel (14),
wobei die Spannvorrichtung (16) eine Ausrichtfläche (18) für das Sägeblatt (12), zumindest ein Spannorgan (20) und eine Betätigungseinrichtung (22) zum Beaufschlagen des Spannorgans (20) umfasst,
wobei eine Rotationsbewegung der Betätigungseinrichtung (22) um die Stößelachse (A) in eine senkrecht zur Stößelachse (A) erfolgende Spannbewegung des Spannorgans (20) umsetzbar ist, durch die das Spannorgan (20) das Sägeblatt (12) in Richtung der Ausrichtfläche (18) beaufschlagt, **dadurch gekennzeichnet,**
**dass** die Spannvorrichtung (16) von einem Träger (26) des Stößels (14) getragen ist
**dass** der Träger (26) einen Aufnahmeabschnitt (30) für das Sägeblatt (12) umfasst, in den das Sägeblatt (12) einsetzbar ist und der den freien Endbereich (28) des Trägers (26) bildet, wobei die Betätigungseinrichtung (22) den Aufnahmeabschnitt (30) des Trägers (26) umgibt, und
**dass** der Aufnahmeabschnitt (30) Formschlussmittel (32) aufweist, die ein in den Aufnahmeabschnitt (30) eingesetztes Sägeblatt (12) in axialer Richtung positionieren.

2. Stichsäge nach Anspruch 1,
wobei die gesamte Spannvorrichtung (16) ein Bestandteil des Stößels (14) und gemeinsam mit dem Stößel (14) bewegbar ist, und/oder wobei die Spannvorrichtung (16) das freie Ende des Stößels (14) bildet.

3. Stichsäge nach Anspruch 1 oder 2,
wobei die Betätigungseinrichtung (22) der Spannvorrichtung (16) einen, bevorzugt ring- oder hülsenförmigen, Hohlkörper (24) umfasst, wobei das Spannorgan (20) und die Ausrichtfläche (18) innerhalb des Hohlkörpers (24) angeordnet sind.

4. Stichsäge nach einem der vorhergehenden Ansprüche,
wobei der Träger (26) als Hubstange ausgebildet ist.

5. Stichsäge nach einem der vorhergehenden Ansprüche,
wobei die Spannvorrichtung (16) an einem freien Endbereich (28) des Trägers (26) angeordnet ist, und/oder wobei die Betätigungseinrichtung (22) drehbar an dem Träger (26) des Stößels (14) angebracht ist.

6. Stichsäge nach einem der vorhergehenden Ansprüche,
wobei die Ausrichtfläche (18) an dem Aufnahmeabschnitt (30) des Trägers (26) ausgebildet ist.

7. Stichsäge nach Anspruch 5 oder 6,
wobei das Spannorgan (20) an dem Aufnahmeabschnitt (30) beweglich gelagert ist, und/oder wobei die Spannbewegung des Spannorgans (20) zwischen der Betätigungseinrichtung (22) und dem Aufnahmeabschnitt (30) des Trägers (26) erfolgt, und/oder wobei die Formschlussmittel (32) und die Ausrichtfläche (18) eine zum Spannorgan (20) hin offene Aufnahme (34) für das Sägeblatt (12) bilden.

8. Stichsäge nach einem der vorhergehenden Ansprüche,
wobei zum Umsetzen der Rotationsbewegung der Betätigungseinrichtung (22) in die Spannbewegung des Spannorgans (20) ein Umsetzmechanismus (36) vorgesehen ist, insbesondere wobei der Umsetzmechanismus (36) selbsthemmend ausgebildet ist.

9. Stichsäge nach Anspruch 8,
wobei der Umsetzmechanismus (36) mehrstufig ausgebildet ist und eine von der Rotationsbewegung der Betätigungseinrichtung (22) gebildete Eingangsbewegung über wenigstens eine Zwischenbewegung in eine von der Spannbewegung des Spannorgans (20) gebildete Ausgangsbewegung umsetzt, und/oder wobei der Umsetzmechanismus (36) die Rotationsbewegung der Betätigungseinrichtung (22) in eine Translationsbewegung der Betätigungseinrichtung (22) und die Translationsbewegung der Betätigungseinrichtung (22) in die Spannbewegung des Spannorgans (20) umsetzt, und/oder wobei der Umsetzmechanismus (36) zwischen der Betätigungseinrichtung (22) und einem Träger (26) des Stößels (14) ein Gewinde (38, 39) umfasst, durch welches die Rotationsbewegung der Betätigungseinrichtung (22) in eine Translationsbewegung der Betätigungseinrichtung (22) umsetzbar ist, und/oder wobei der Umsetzmechanismus (36) einen eine Rampe oder Schräge umfassenden Steuerabschnitt (40) aufweist, durch welchen eine Bewegung, insbesondere eine Translationsbewegung oder eine Rotationsbewegung, der Betätigungseinrichtung (22) in die Spannbewegung des Spannorgans (20) umsetzbar ist.

10. Stichsäge nach Anspruch 9,
wobei der Steuerabschnitt (40) an der Betätigungseinrichtung (22), insbesondere an einer Innenwand (42) eines von der Betätigungseinrichtung (22) gebildeten Hohlkörpers (24), ausgebildet ist, wobei vorzugsweise der Steuerabschnitt (40) von einer umlaufenden Übergangsfläche zwischen unterschiedliche Durchmesser aufweisenden zylindrischen Abschnitten des Hohlkörpers (24) gebildet ist.

11. Stichsäge nach einem der vorhergehenden Ansprüche,
wobei ein Rückstellelement (44) vorgesehen ist, gegen dessen Rückstellkraft die Rotationsbewegung der Betätigungseinrichtung (22) von einer Schließstellung in eine Öffnungsstellung erfolgt, insbesondere wobei das Rückstellelement (44) eine Schrauben-, Gewinde- oder Drehfeder umfasst, die zwischen einem Aufnahmeabschnitt (30) eines Trägers (26) des Stößels (14) und einem von der Betätigungseinrichtung (22) gebildeten, den Aufnahmeabschnitt (30) umgebenden Hohlkörper (24) wirksam ist.

12. Stichsäge nach einem der vorhergehenden Ansprüche,
wobei das Spannorgan (20) einteilig oder einstückig ausgebildet ist und jeweils direkt einerseits mit der Betätigungseinrichtung (22) und andererseits mit dem Sägeblatt (12) zusammenwirkt.

13. Stichsäge nach einem der Ansprüche 1 bis 11,
wobei das Spannorgan (20) mehrteilig ausgebildet ist und ein Druckelement (46) zum Beaufschlagen des Sägeblatts (12), ein mit der Betätigungseinrichtung (22) zusammenwirkendes Übertragungselement (48) sowie zwischen dem Übertragungselement (48) und dem Druckelement (46) eine Druckfeder (50) umfasst.

14. Stichsäge nach einem der vorhergehenden Ansprüche,
wobei ein durch Einsetzen des Sägeblatts (12) spannbarer Auswerfer (54, 56) vorgesehen ist, insbesondere wobei der Auswerfer eine an einem Träger (26) des Stößels (14) abgestützte Auswurffeder (54) umfasst, die bei eingesetztem Sägeblatt (12) ein mit dem Sägeblatt (12) zusammenwirkendes Auswurfelement (56) in eine Auswurfrichtung vorspannt.

15. Stichsäge nach einem der vorhergehenden Ansprüche,
wobei ein Pendelerreger für eine Pendelbewegung des Sägeblatts (12) vorgesehen ist.

## Claims

1. A jig saw comprising
a saw blade (12);
a plunger (14) for a sawing movement of the saw blade (12) along a plunger axis (A); and
a clamping apparatus (16) for fixedly clamping the saw blade (12) to the plunger (14),
wherein the clamping apparatus (16) comprises an alignment surface (18) for the saw blade (12), at least one clamping member (20), and an actuation device (22) for acting on the clamping member (20),
wherein a rotational movement of the actuation device (22) about the plunger axis (A) can be converted into a clamping movement of the clamping member (20) which takes place perpendicular to the plunger axis (A) and by which the clamping member (20) acts on the saw blade (12) in the direction of the alignment surface (18),
**characterized in that**
the clamping apparatus (16) is supported by a carrier (26) of the plunger (14),
**in that** the carrier (26) comprises a reception section (30) for the saw blade (12) into which the saw blade (12) can be inserted and which forms the free end region (28) of the carrier (26), wherein the actuation device (22) surrounds the reception section (30) of the carrier (26), and
**in that** the reception section (30) has form-fitting means (32) which position a saw blade (12) inserted into the reception section (30) in the axial direction.

2. A jig saw in accordance with claim 1,
wherein the total clamping apparatus (16) is a component of the plunger (14) and is movable together with the plunger (14), and/or wherein the clamping apparatus (16) forms the free end of the plunger (14).

3. A jig saw in accordance with claim 1 or claim 2,
wherein the actuation device (22) of the clamping apparatus (16) comprises a hollow body (24), preferably an annular or sleeve-shaped hollow body (24), wherein the clamping member (20) and the alignment surface (18) are arranged within the hollow body (24).

4. A jig saw in accordance with any one of the preceding claims,
wherein the carrier (26) is configured as a lifting rod.

5. A jig saw in accordance with any one of the preceding claims,
wherein the clamping apparatus (16) is arranged at a free end region (28) of the carrier (26), and/or wherein the actuation device (22) is rotatably attached to the carrier (26) of the plunger (14).

6. A jig saw in accordance with any one of the preceding claims,
wherein the alignment surface (18) is formed at the reception section (30) of the carrier (26).

7. A jig saw in accordance with claim 5 or claim 6,
wherein the clamping member (20) is movably supported at the reception section (30), and/or wherein the clamping movement of the clamping member (20) takes place between the actuation device (22) and the reception section (30) of the carrier (26), and/or wherein the form-fitting means (32) and the alignment surface (18) form a receiver (34), which is open toward the clamping member (20), for the saw blade (12).

8. A jig saw in accordance with any one of the preceding claims,
wherein a conversion mechanism (36) is provided for converting the rotational movement of the actuation device (22) into the clamping movement of the clamping member (20), in particular wherein the conversion mechanism (36) is self-locking.

9. A jig saw in accordance with claim 8,
wherein the conversion mechanism (36) is of multi-stage design and converts an input movement, which is formed by the rotational movement of the actuation device (22), via at least one intermediate movement into an output movement formed by the clamping movement of the clamping member (20), and/or wherein the conversion mechanism (36) converts the rotational movement of the actuation device (22) into a translational movement of the actuation device (22) and converts the translational movement of the actuation device (22) into the clamping movement of the clamping member (20), and/or wherein the conversion mechanism (36) between the actuation device (22) and a carrier (26) of the plunger (14) comprises a thread (38, 39) by which the rotational movement of the actuation device (22) can be converted into a translational movement of the actuation device (22), and/or wherein the conversion mechanism (36) has a control section (40) which comprises a ramp or a slope and by which a movement, in particular a translational movement or a rotational movement, of the actuation device (22) can be converted into the clamping movement of the clamping member (20).

10. A jig saw in accordance with claim 9,
wherein the control section (40) is formed at the actuation device (22), in particular at an inner wall (42) of a hollow body (24) formed by the actuation device (22), wherein preferably the control section (40) is formed by a peripheral transition surface between cylindrical sections of the hollow body (24) having different diameters.

11. A jig saw in accordance with any one of the preceding claims,
wherein a return element (44) is provided against whose return force the rotational movement of the actuation device (22) takes place from a closed position into an open position, in particular wherein the return element (44) comprises a helical spring, a threaded spring or a torsion spring which is effective between a reception section (30) of a carrier (26) of the plunger (14) and a hollow body (24) formed by the actuation device (22) and surrounding the reception section (30).

12. A jig saw in accordance with any one of the preceding claims,
wherein the clamping member (20) is formed in one part or in one piece and cooperates directly in each case with the actuation device (22), on the one hand, and with the saw blade (12), on the other hand.

13. A jig saw in accordance with any one of the claims 1 to 11,
wherein the clamping member (20) is formed in multiple parts and comprises a pressure element (46) for acting on the saw blade (12), a transmission element (48) cooperating with the actuation device (22), and a compression spring (50) between the transmission element (48) and the pressure element (46).

14. A jig saw in accordance with any one of the preceding claims,
wherein an ejector (54, 56) is provided which can be tensioned by inserting the saw blade (12), in particular wherein the ejector comprises an ejection spring (54) which is supported at a carrier (26) of the plunger (14) and which, when the saw blade (12) is inserted, preloads an ejection element (56), which cooperates with the saw blade (12), in an ejection direction.

15. A jig saw in accordance with any one of the preceding claims,
wherein a pendulum exciter is provided for a pendulum movement of the saw blade (12).

## Revendications

1. Scie sauteuse comportant
une lame de scie (12),
un poussoir (14) pour un mouvement de sciage de la lame de scie (12) le long d'un axe de poussoir (A), et
un dispositif de serrage (16) pour serrer de manière fixe la lame de scie (12) sur le poussoir (14),
dans laquelle
le dispositif de serrage (16) comprend une surface d'alignement (18) pour la lame de scie (12), au moins un élément de serrage (20) et un moyen d'actionnement (22) pour solliciter l'élément de serrage (20),
un mouvement de rotation du moyen d'actionnement (22) autour de l'axe de poussoir (A) peut être converti en un mouvement de serrage de l'élément de serrage (20) qui s'effectue perpendiculairement à l'axe de poussoir (A) et par lequel l'élément de serrage (20) sollicite la lame de scie (12) dans la direction de la surface d'alignement (18),
**caractérisée en ce que**
le dispositif de serrage (16) est porté par un support (26) du poussoir (14), **en ce que** le support (26) comprend une portion de réception (30) pour la lame de scie (12), dans laquelle la lame de scie (12) peut être insérée et qui constitue la zone d'extrémité libre (28) du support (26), le moyen d'actionnement (22) entourant la portion de réception (30) du support (26), et **en ce que** la portion de réception (30) comprend des moyens de coopération de forme (32) qui positionnent en direction axiale une lame de scie (12) insérée dans la portion de réception (30).

2. Scie sauteuse selon la revendication 1,
dans laquelle l'ensemble du dispositif de serrage (16) est un composant du poussoir (14) et est mobile conjointement avec le poussoir (14), et/ou le dispositif de serrage (16) constitue l'extrémité libre du poussoir (14).

3. Scie sauteuse selon la revendication 1 ou 2,
dans laquelle le moyen d'actionnement (22) du dispositif de serrage (16) comprend un corps creux (24), de préférence en forme d'anneau ou de manchon, l'élément de serrage (20) et la surface d'alignement (18) étant disposés à l'intérieur du corps creux (24).

4. Scie sauteuse selon l'une des revendications précédentes,
dans laquelle le support (26) est réalisé sous forme de tige de levage.

5. Scie sauteuse selon l'une des revendications précédentes,
dans laquelle le dispositif de serrage (16) est disposé sur une zone d'extrémité libre (28) du support (26), et/ou
le moyen d'actionnement (22) est monté de façon mobile en rotation sur le support (26) du poussoir (14).

6. Scie sauteuse selon l'une des revendications précédentes,
dans laquelle la surface d'alignement (18) est réalisée sur la portion de réception (30) du support (26).

7. Scie sauteuse selon la revendication 5 ou 6,
dans laquelle l'élément de serrage (20) est monté de façon mobile sur la portion de réception (30), et/ou
le mouvement de serrage de l'élément de serrage (20) s'effectue entre le moyen d'actionnement (22) et la portion de réception (30) du support (26), et/ou
les moyens de coopération de forme (32) et la surface d'alignement (18) constituent un logement (34) pour la lame de scie (12), qui est ouvert vers l'élément de serrage (20).

8. Scie sauteuse selon l'une des revendications précédentes,
dans laquelle un mécanisme de conversion (36) est prévu pour convertir le mouvement de rotation du moyen d'actionnement (22) en mouvement de serrage de l'élément de serrage (20), en particulier le mécanisme de conversion (36) étant de conception autobloquante.

9. Scie sauteuse selon la revendication 8,
dans laquelle le mécanisme de conversion (36) est de conception à plusieurs étages et convertit un mouvement d'entrée formé par le mouvement de rotation du moyen d'actionnement (22) via au moins un mouvement intermédiaire en un mouvement de sortie formé par le mouvement de serrage de l'élément de serrage (20), et/ou
le mécanisme de conversion (36) convertit le mouvement de rotation du moyen d'actionnement (22) en un mouvement de translation du moyen d'actionnement (22) et convertit le mouvement de translation du moyen d'actionnement (22) en mouvement de serrage de l'élément de serrage (20), et/ou
entre le moyen d'actionnement (22) et un support (26) du poussoir (14), le mécanisme de conversion (36) comprend un filetage (38, 39) permettant de convertir le mouvement de rotation du moyen d'actionnement (22) en un mouvement de translation du moyen d'actionnement (22), et/ou le mécanisme de conversion (36) comprend une portion de commande (40) présentant une rampe ou une pente et permettant de convertir un mouvement, en particulier un mouvement de translation ou un mouvement de rotation, du moyen d'actionnement (22) en mouvement de serrage de l'élément de serrage (20).

10. Scie sauteuse selon la revendication 9,
dans laquelle la portion de commande (40) est réalisée sur le moyen d'actionnement (22), en particulier sur une paroi intérieure (42) d'un corps creux (24) formé par le moyen d'actionnement (22), et
de préférence, la portion de commande (40) est formée par une surface de transition circonférentielle entre des portions cylindriques du corps creux (24) ayant des diamètres différents.

11. Scie sauteuse selon l'une des revendications précédentes,
dans laquelle est prévu un élément de rappel (44) contre la force de rappel duquel s'effectue le mouvement de rotation du moyen d'actionnement (22) depuis une position fermée jusque dans une position ouverte, et
en particulier, l'élément de rappel (44) comprend un ressort hélicoïdal, fileté ou de torsion qui agit entre une portion de réception (30) d'un support (26) du poussoir (14) et un corps creux (24) formé par le moyen d'actionnement (22) et entourant la portion de réception (30).

12. Scie sauteuse selon l'une des revendications précédentes,
dans laquelle l'élément de serrage (20) est réalisé d'un seul tenant ou en une seule pièce et coopère directement avec le moyen d'actionnement (22), d'une part, et avec la lame de scie (12), d'autre part, respectivement.

13. Scie sauteuse selon l'une des revendications 1 à 11,
dans laquelle l'élément de serrage (20) est réalisé en plusieurs pièces et comprend un élément de pression (46) pour solliciter la lame de scie (12), un élément de transmission (48) coopérant avec le moyen d'actionnement (22), et un ressort de compression (50) entre l'élément de transmission (48) et l'élément de pression (46).

14. Scie sauteuse selon l'une des revendications précédentes,
dans laquelle est prévu un éjecteur (54, 56) qui peut être tendu par l'insertion de la lame de scie (12), l'éjecteur comprenant en particulier un ressort d'éjection (54) qui prend appui sur un support (26) du poussoir (14) et qui, la lame de scie (12) étant insérée, précontraint un élément d'éjection (56), coopérant avec la lame de scie (12), dans une direction d'éjection.

15. Scie sauteuse selon l'une des revendications précédentes,
dans laquelle est prévu un excitateur pendulaire pour un mouvement pendulaire de la lame de scie (12).
